(19) Europäisches Patentamt
European Patent Office
Office européen des brevets

(11) **EP 3 330 108 A1**

(12) **EUROPEAN PATENT APPLICATION**

(43) Date of publication:
06.06.2018 Bulletin 2018/23

(51) Int Cl.:
*B60C 23/04* (2006.01)    *B60R 25/24* (2013.01)
*H01Q 1/22* (2006.01)    *H01Q 1/32* (2006.01)
*H01Q 7/00* (2006.01)

(21) Application number: 17204078.4

(22) Date of filing: 28.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.11.2016 US 201615364427

(71) Applicant: TRW Automotive U.S. LLC
Livonia,
Michigan 48150 (US)

(72) Inventors:
• LIN, Xing Ping
West Bloomfiled, MI Michigan 48324 (US)
• BLOSSFELD, Michael
South Lyon, MI Michigan 48178 (US)
• HERTWIG, Frank
Brighton, MI Michigan 48114 (US)

(74) Representative: Emde, Eric
Wagner & Geyer
Gewürzmühlstrasse 5
80538 München (DE)

(54) **ANTENNA WITH PARASITIC ELEMENT**

(57) An antenna system for a vehicle includes a housing defining an interior space having a center. A component is provided for at least one of transmitting and receiving signals indicative of a vehicle condition. A loop antenna is provided in the interior space and electrically connected to the component. A parasitic element is provided for increasing a signal strength of the antenna system. The parasitic element extends from a first end to a second end spaced from the first end by a gap.

EP 3 330 108 A1

## Description

TECHNICAL FIELD

The present invention relates generally to antennas, and more specifically to a vehicle antenna system having a parasitic element.

BACKGROUND

Many vehicle components include an antenna for transmitting and receiving wireless signals related to the vehicle, e.g., tire pressure, door locking/unlocking, etc. Since transmission and reception can involve battery powered remote devices, battery life can be important to design criteria, so both signal strength and battery power are considered when designing the antenna.

SUMMARY

One embodiment of the present invention includes an antenna system for a vehicle having a housing defining an interior space with a center. A component is provided for at least one of transmitting and receiving signals indicative of a vehicle condition. A loop antenna is provided in the interior space and electrically connected to the component. A parasitic element is provided for increasing a signal strength of the antenna system. The parasitic element extends from a first end to a second end spaced from the first end by a gap.

In another example, an antenna system for a vehicle includes a housing defining an interior space. A transmitter includes an output for transmitting signals indicative of a vehicle condition and operating at a predetermined frequency. A loop antenna provided in the interior space is electrically connected to the transmitter output. An open loop parasitic element positioned outside the loop antenna increases a signal strength of the loop antenna.

Other objects and advantages and a fuller understanding of the invention will be had from the following detailed description and the accompanying drawings.

BRIEF DESCRIPTION OF THE DRAWINGS

Fig. 1 is a schematic illustration of a vehicle having an antenna system in accordance with an embodiment of the present invention.

Fig. 2 is a schematic illustration of the antenna system of Fig. 1.

Fig. 3 is a front view of a parasitic element of the antenna system of Fig. 1.

Fig. 4 is a top view of an alternative configuration for a parasitic element of the antenna system of Fig. 1.

Fig. 5 is a front view of an example antenna system for a tire pressure monitor.

Fig. 6 is a front view of another example antenna system for a tire pressure monitor.

Fig. 7 is a schematic illustration of a key fob including the antenna system of the present invention.

Fig. 8 is a top section view of an example antenna system for the key fob of Fig. 7.

Fig. 9 is a top section view of another example antenna system for the key fob of Fig. 7.

Fig. 10 is a schematic illustration of a simulation conducted using an example antenna system.

Fig. 11 is a graph plotting frequency vs. signal strength for the simulation of Fig. 10.

Fig. 12 is another graph plotting frequency vs. signal strength for the simulation of Fig. 10.

DETAILED DESCRIPTION

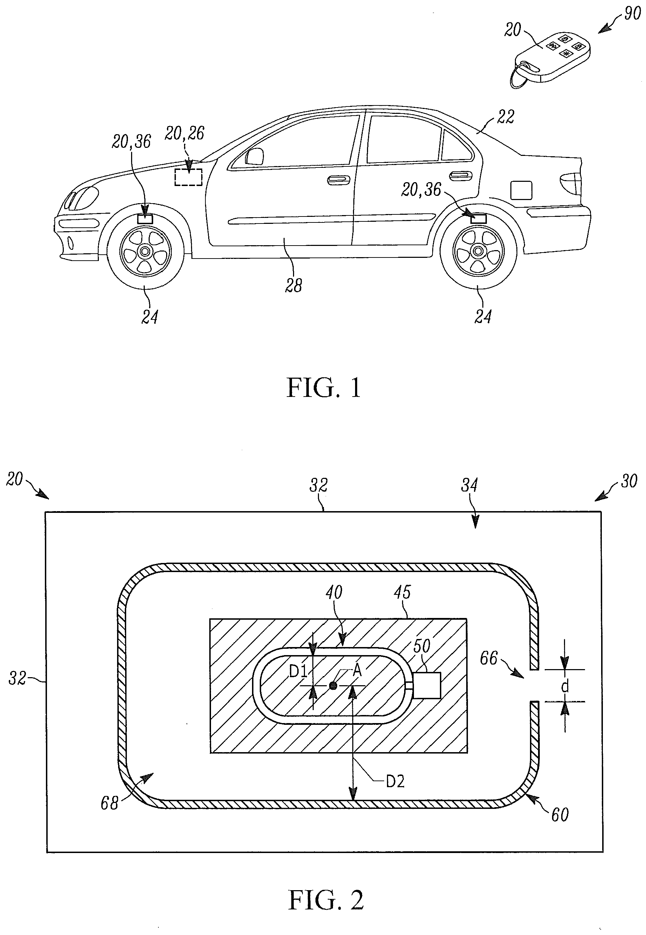

The present invention relates generally to antennas, and more specifically to a vehicle antenna system having a parasitic element. Figs. 1-2 illustrate an antenna system 20 for a vehicle 22 in accordance with the present invention. The antenna system 20 can be used as part of any device that uses wireless signal transmission and/or reception to monitor conditions in and/or control operation of certain vehicle systems. Fig. 1 illustrates various locations in the vehicle 22 where the antenna system 20 can be implemented, such as within one or more tires 24 as a tire condition monitoring (TCM) sensor 36 for monitoring tire pressure, temperature, wear, etc. The antenna system 20 can also be implemented as part of a key fob 90 configured for remote operation of vehicle systems such as remote keyless entry (RKE) systems, remote start systems, remote security systems, etc.

Generally speaking, the remote component, e.g., key fob 90 or TCM sensor 36, can communicate wirelessly vehicle based systems 26 in order to carry out their specific functions. In Fig. 1, these vehicle based systems 26 are illustrated schematically in a front-center, centralized location in the vehicle 22. This is for purposes of illustration only and is not meant to exclude other locations and/or de-centralized system configurations. The components of the vehicle based systems 26 can be centralized and/or distributed in any manner suited to perform the application specific tasks for which they are intended.

For example, where the remote component is a key fob 90, the vehicle based system 26 with which the fob communicates wirelessly can be a centralized RKE control module that communicates with a central vehicle control module, such as a body control module (BCM) over a communication bus, such as a CAN bus. Alternatively, the BCM itself could include wireless communication capabilities and therefore could communicate directly with the fob 90.

As another example, where the remote component is a TCM sensor 36, the sensor could communicate wirelessly and at close range with a tire specific receiver mounted, for example, in the area of the wheel well of that specific tire 24. This tire specific receiver could be wired to a TCM control module which communicates with a BCM via the vehicle CAN bus, or could be wired directly to the BCM. Alternatively, the TCM sensor 36 could communicate wirelessly with a TCM control module which communicates with a BCM via the vehicle CAN bus, or could communicate wirelessly with the BCM directly.

As shown in Fig. 2, the antenna system 20 includes a housing 30 having one or more walls 32 defining an interior space 34. In a key fob 90 implementation, the housing 30 would be the housing of the fob itself. In a TCM sensor 36 implementation, the housing 30 can be the housing of the tire-based sensor that, for example, is connected to the vehicle wheel inside the tire 24 and to which the valve stem is attached.

For purposes of reference in this description of the antenna system 20, the interior space 34 is referred to as having a geometric center indicated generally at A. It is from this center A that characteristics of the antenna system 20, such as dimensions, spacing, and relative positioning of components, can be described. It should be understood that selecting the center A for this purpose is a matter of convenience, as the dimensions, spacing, and relative positioning of components of the antenna system 20 could be described from another reference point. The housing 30 is rectangular and can be formed from any non-conductive material, *e.g.*, plastic or polymer, that does not adversely affect the transmission of radio waves or signals therethrough. The housing 30 could have any alternative shape depending, for example, on its intended purpose (*e.g.*, TCM vs. RKE) and/or its location within the vehicle 22.

The antenna system 20 includes a loop antenna 40 positioned within the interior space 34 of the housing 30 and connected to a printed circuit board (PCB) 45. The antenna 40 can have alternative configurations. For example, the loop antenna 40 can be a small, standup antenna (not shown) positioned in the interior space 34. As another example, although the loop antenna 40 is illustrated as including a single loop, it could alternatively have a multiple loop configuration (not shown). In any case, the loop antenna 40 has a closed configuration in that it has no discernible ends. The loop antenna 40 is formed from suitable antenna material, such as an electrically conductive, *e.g.,* metal, rod, wire, or tubing .

The loop antenna 40 is spaced a distance D1 from the center A at its closest point. A component 50 constituting a transmitter, receiver, or transceiver is secured to the loop antenna 40 for transmitting and/or receiving radio signals. In the example configuration of Fig. 2, the component can be a transmitter 50 operating at an ultra high radio frequency. For example, in one specific configuration, the transmitter 50 can operate at about 314 MHz or about 435 MHz, depending on the vehicle condition monitored/controlled.

A parasitic element 60 is connected to the housing 30 at a second distance D2 from the center A greater than the first distance D1. The parasitic element 60 is therefore located outside the loop antenna 40 relative to the center A of the interior space 34. The parasitic element 60 is a resonating structure and therefore can be secured to the housing 30 or component(s) mounted in the housing in any manner suited to permit the parasitic element to resonate under predetermined conditions. Examples of manners in which the parasitic element 60 can be secured to the housing 30 include securing the parasitic element 60 to the housing 30 via adhesive, fastener, or a mechanical component, such as a clip. As another alternative, the parasitic element 60 could be printed or plated directly on the housing.

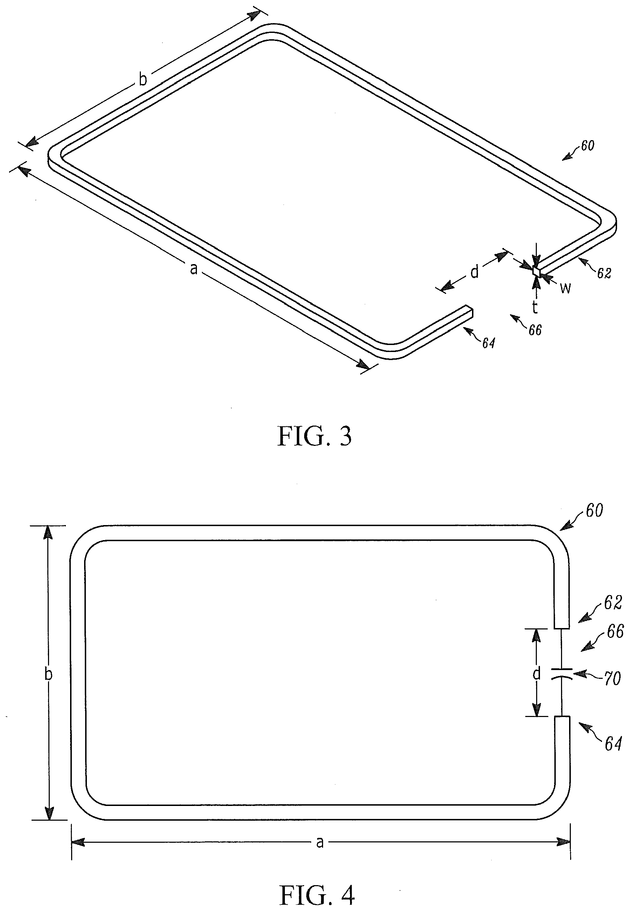

Referring further to Fig. 3, in one example configuration, the parasitic element 60 is an open loop structure and extends from a first end 62 to a second end 64. The first and second ends 62 and 64 are spaced from each other by an air gap 66. In another example configuration shown in Fig. 4, a capacitor 70 is provided in the gap 66. The length of the gap 66 is indicated at $d$ and can, for example, be on the order of about 1mm to about 4mm. Although a single gap 66 is shown, the parasitic element 60 could further include additional gaps along its length having the same or different gap lengths.

The parasitic element 60 has a rectangular configuration that is similar in shape to the loop antenna 40, but has corresponding dimension(s) that are larger than those of the loop antenna. The length and width dimensions of the parasitic element 60 are indicated at $a$ and $b,$ respectively. The parasitic element 60 and the loop antenna 40 are arranged within the housing 30 in a generally concentric manner, although other configurations can be contemplated. For example, in alternative configurations, the loop antenna 40 and the parasitic element 60 could have similar square, round, elliptical, or other geometric shape with the parasitic element configured to be the larger element. The parasitic element 60 can be concentric with the loop antenna 40 or non-concentric with the loop antenna 40.

The parasitic element 60 is formed from an electrically conducive material, such as a metal or polymer material, and has a rectangular cross-section with a width $w$ and thickness $t.$ The width $w$ and thickness $t$ can vary. In one example configuration, the width $w$ and thickness $t$ can be about 1mm to about 4mm. The width $w$ and thickness $t$ can be the same, *i.e.,* the parasitic element 60 can be square in cross-section. The width $w$ and thickness $t$ can be different, *i.e.,* the parasitic element 60 can be rectangular in cross-section. Alternatively, the parasitic element 60 could have a different cross-sectional shape, such as a polygonal cross-section or a circular cross-section (not shown).

Regardless of its specific shape and cross-section, the parasitic element 60 is configured as a resonating structure that resonates at a frequency approximating the operating frequency of the transmitter 50. The parasitic element 60, having a loop size and area that is larger than that of the loop antenna 40, exhibits better radiation performance than the loop antenna. When the transmitter 50 is operated to excite the loop antenna 40 at the desired operating frequency to transmit a signal, the transmitted signal will act upon the parasitic element 60 and cause it to resonate at that same operating frequency. As a result, the resonating parasitic element 60 will boost the transmitting power of the loop antenna 40.

The signal boost afforded by the parasitic element 60 allows the antenna system 20 to meet range requirements for the vehicle systems in which it is implemented by improving the transmission efficiency of the antenna system. The additional transmitting power afforded by the inclusion of the parasitic element 60 also allows the antenna system 20 to be operated with reduced battery power. Furthermore, utilizing a parasitic element 60 instead of a larger loop antenna 40 reduces both the size and weight of the antenna system 20, which is advantageous due to spatial restrictions in the vehicle 22.

The parasitic element 60 can be modeled as an inductor "L" and the ends defining the air gap 66 can be modeled as a capacitor "C". The capacitance of the air gap 66 can be governed by the following equation (1):

$$C = \frac{\varepsilon S}{d}$$

where C is the capacitance (in microfarads $\mu$F), $\varepsilon$ is the absolute dielectric permittivity ($\sim$1 for air), S is the surface area of the parasitic element cross-section ($w \times t$ in mm$^2$), and $d$ is the air gap length (in mm). When present, the capacitance C of the capacitor 70 is used instead.

The parasitic element 60 can be considered a single turn wire coil and its inductance $L$ can therefore be governed by the following equation (2):

$$L = \frac{\mu_0 N^2 A}{l}$$

where $\mu_0$ is the permeability of free space or magnetic constant ($1.2566370614 \ldots \times 10^{-6}$ H/m), N is the number of turns in the coil (*i.e.,* 1 in the case of the parasitic element 60), $A$ is the cross-sectional area of the parasitic element ($w \times t$), and $l$ is the length of the coil.

The frequency of the parasitic element can be governed by the following equation (3):

$$f = \frac{1}{2\pi\sqrt{LC}}$$

where $f$ is the frequency (in Hz), $C$ is the capacitance from equation (1) and $L$ is the inductance (in henrys H) from equation (2).

It is clear from equation (2) that the configuration of the parasitic element 60 can be adjusted to produce a desired resonating frequency. In order to boost the signal of the transmitter 50 and loop antenna 40, the parasitic element 60 can be configured to resonate at a frequency that matches the operating frequency of the transmitter. More specifically, the gap length $d$, width $w$, thickness $t$, and/or lengths $a$, $b$ of the parasitic element 60 can be tailored to provide the desired resonating frequency. It will be appreciated that where multiple gaps 66 are present, each gap can be modeled as a separate capacitor $C_1$, $C_2$, .. $C_n$ using the same modeled inductor L. When multiple gaps 66 exist, the total equivalent capacitance ($C_1//C_2//..//C_n$) is used as the capacitance C in equation (3) to evaluate the antenna system 20.

As noted previously, the antenna system 20 can be implemented in vehicle components such as TCM sensors 36 and RKE key fobs 90. In both cases, the inductance of the open parasitic element 60 can be controlled to provide a resonating frequency approximating the intended operating frequency of the loop antenna 40, thereby boosting the output power of the antenna system 20 due to the larger size of the parasitic element compared to the loop antenna. In this manner, the antenna system 20 can provide increased power while helping to conserve battery life.

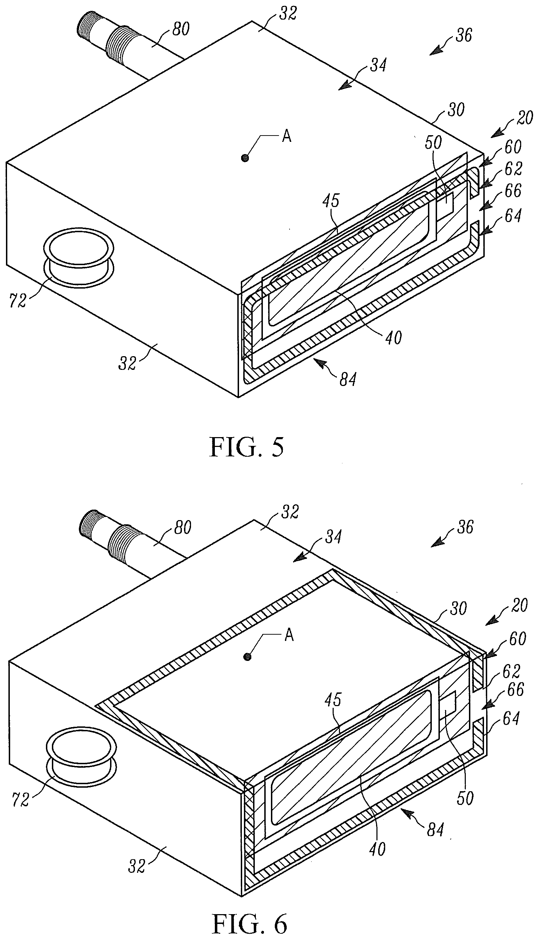

Figs. 5-6 illustrate example configurations for the antenna system 20 when used in a TCM sensor 36 for monitoring tire conditions, such as pressure and/or temperature. The TCM sensor 36 has a housing 30 that is shown schematically as having a generally boxed, rectangular configuration. This is for convenience and illustrative purposes only. It should be appreciated that the TCM sensor housing 30 can have any desired shape configured to serve the intended implementation.

The PCB 45 and loop antenna 40 are vertically oriented and positioned adjacent the right side wall 32 of the housing 30. In the configuration of Fig. 5, the parasitic element 60 is secured to the interior surface of the right side wall 32 so as to be aligned with the loop antenna 40. The gap 66 in the parasitic element 60 is aligned with the transmitter 50 on the loop antenna 40. In the configuration of Fig. 6, the parasitic element 60 is secured to and extends along both the interior surface of the right side wall 32 and the interior surface of the top wall 32. The gap 66 in the parasitic element 60 is aligned with the transmitter 50 on the loop antenna 40.

In the example configurations of Figs. 5 and 6, the TCM sensor 36 includes a pressure sensor 72 that is positioned within the housing 30 and exposed to pressure conditions in the tire. The pressure sensor 72 is also electrically connected to the transmitter 50. A valve stem 80 extends through the housing 30 and is configured to extend through the wheel rim (not shown) to secure the tire pressure monitor thereto in a known manner. Also, it should be noted that in both example configurations, the spatial relationship between the parasitic element 60 and the loop antenna 40 is maintained. More specifically, the parasitic element 60 is positioned further from the center A than the loop antenna 40.

In operation, air within the tire 24 (see Fig. 1) enters the housing 30 and acts on the pressure sensor 72. The pressure sensor 72 measures the tire pressure and transmits the measurement to the PCB 45 and transmitter 50. The transmitter 50 excites the loop antenna 40, causing it to transmit a signal at a predetermined frequency. The transmitted signal acts on the parasitic element 60 causing it to resonate at the same frequency. The transmitter 50 signal, boosted by the parasitic element 60, transmits the measurement signal to the vehicle based system 26, such as a TCM controller module.

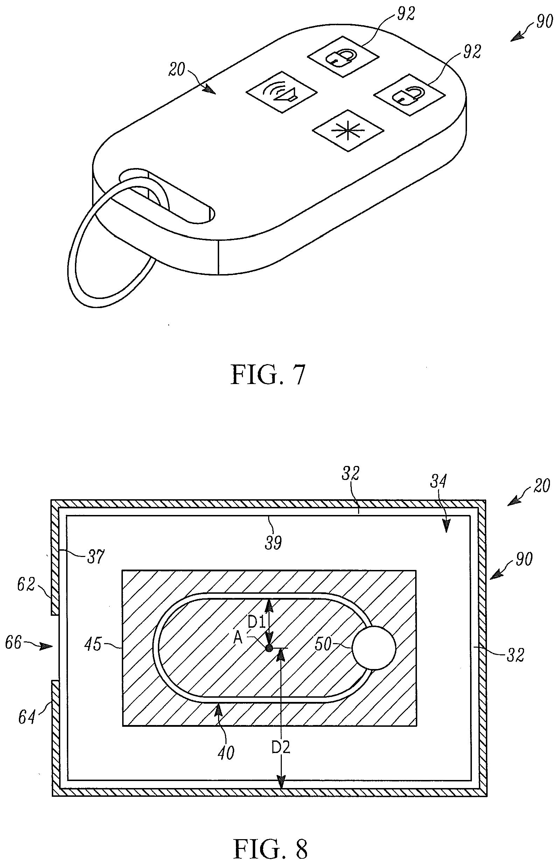

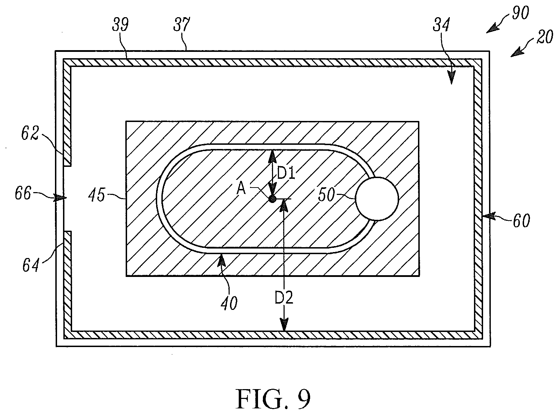

Figs. 7-9 illustrate several example configurations for the antenna system 20 when used in a key fob device 90. The antenna system 20 is positioned within the key fob 90 and electrically connected to buttons 92 for activating RKE functions, such as locking/unlocking the vehicle doors 28 (see Fig. 1), opening the trunk, sounding an alarm, etc. The PCB 45 and loop antenna 40 are horizontally oriented and positioned adjacent the bottom wall 32 of the housing 30. In the example configuration of Fig. 8, the parasitic element 60 is secured to the exterior of the side walls 32 so as to be generally concentric with the loop antenna 40. In this implementation, the parasitic element 60 can be visible on the outside of the fob 90 as a decorative band or bezel. In the example configuration of Fig. 9, the parasitic element 60 is secured to the interior of the side walls 32 so as to be generally concentric with the loop antenna 40.

In both cases, the buttons 92 are electrically connected to the transmitter 50. In operation, the user actuates one of the buttons 92, which transmit the respective operating signal to the PCB 45 and transmitter 50. The transmitter 50 excites the loop antenna 40, causing it to transmit a signal at a predetermined frequency. The transmitted signal acts on the parasitic element 60 causing it to resonate at the same frequency. The transmitter 50 signal, boosted by the parasitic element 60, transmits the operating signal to the vehicle based system 26, such as a RKE controller module.

By providing the loop antenna 40 with the larger parasitic element 60, the antenna systems 20 in the example configurations of Figs. 5-9 are improved. More specifically, implementing the parasitic element 60 into the tire pressure monitor 36 of Figs. 5-6 increases the output power of the antenna system 20 to a value closer to its intended operating power, thereby allowing the antenna system to be made smaller, lighter, and rely on decreased power - resulting in the need for a smaller battery. Implementing the parasitic element 60 into the key fob 90 of Figs. 5-6 increases the output power of the antenna system 20, which increases the operating distance range of the key fob, without requiring increased battery power.

### *Comparative Example*

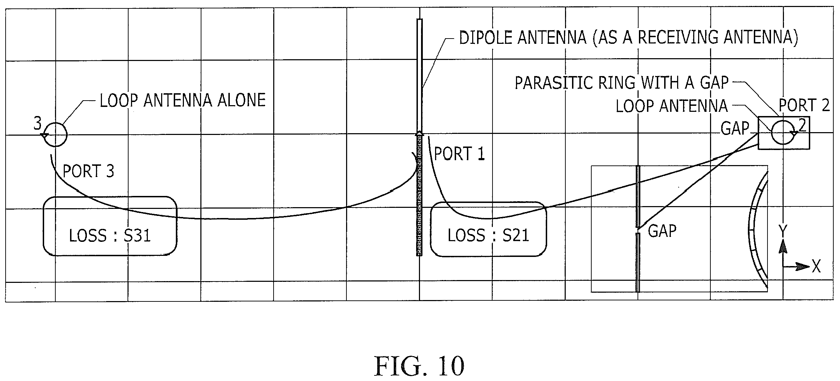

In this example (see Fig. 10), a pair of identical loop antennas were used in conjunction with a receiving dipole antenna. A parasitic element in the form of a metal ring having a 1mm gap between its ends extended around one of the loop antennas. The cross-section of the parasitic ring had a width of 4mm and a thickness of 1mm. The other loop antenna was not provided with a parasitic element.

The dipole receiving antenna had an operating frequency of about 434 Hz. In Fig. 10, Port 1 represents the receiving port. Port 2 represents the transmitting port of the loop antenna surrounded by the parasitic strip. Port 3 represents the transmitting port of the loop antenna by itself. The experiment evaluated the path loss S21, S31 between Ports 1 and 2 as well as between Ports 1 and 3.

The parasitic transmitting path loss S21 was -39.5dB. The loop antenna by itself had a transmitting path loss S31 of -48.7dB. The parasitic ring/loop antenna combination therefore had a path loss 9.2dB less than the loop antenna alone. In other words, with the same input power the parasitic ring can provide 9.2dB more output power compared to the loop antenna alone.

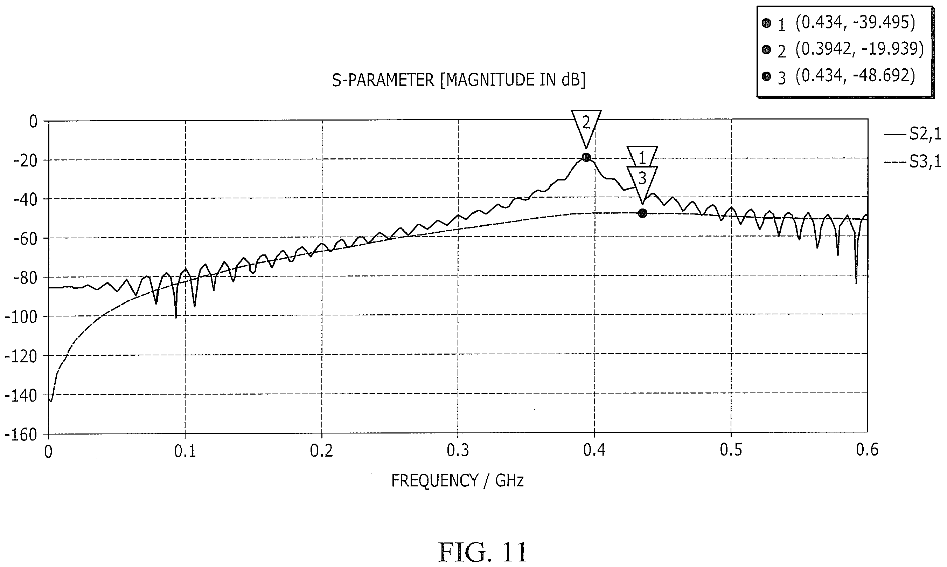

Fig. 11 illustrates the path losses S21, S31 for the parasitic ring and loop antenna over a range of frequencies. This figure shows that the path loss S21 of the parasitic ring peaked at 394MHz, which closely approximates the resonating structure of the parasitic strip.

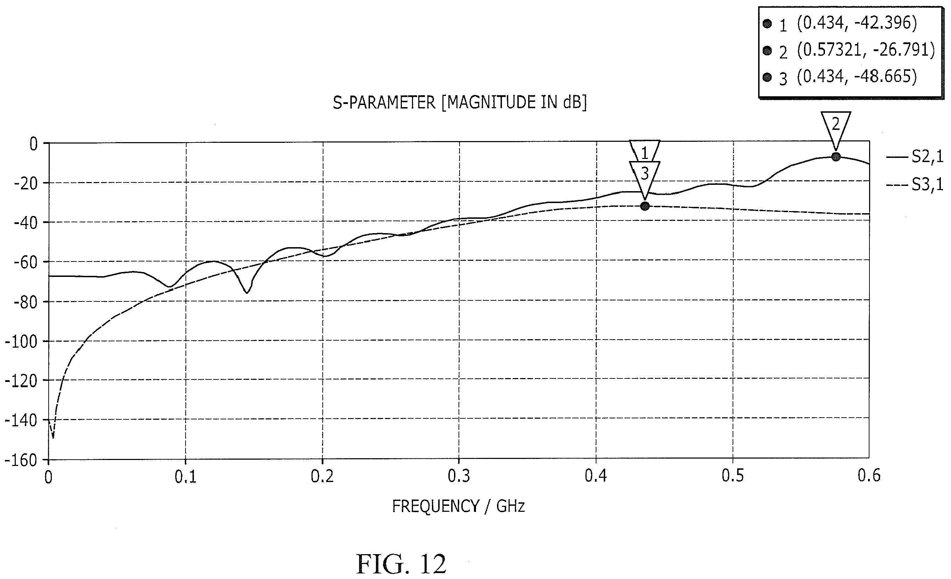

Fig. 12 illustrates a similar example in which the gap of the parasitic structure was increased to 4mm. This figure illustrates a path loss S21 for the parasitic ring that was 6.3dB less than the path loss S31 for the loop antenna alone. The path loss S21 of the parasitic ring peaked at 573MHz. These comparative examples therefore show that including the open-loop parasitic ring with the loop antenna allows the antenna system to closely approximate the operating frequency of the dipole assembly compared to using only the loop antenna.

What have been described above are examples of the present invention. It is, of course, not possible to describe every conceivable combination of components or methodologies for purposes of describing the present invention, but one of ordinary skill in the art will recognize that many further combinations and permutations of the present invention are possible. For example, while the example configurations of the antenna systems described herein are those of remote, battery powered devices where battery conservation can be desirable, it should be appreciated that the antenna systems described herein are not limited to remote, battery powered implementations. Indeed, the antenna systems described herein can be applied to any wireless signal transmitting application where a signal boost is desired. The loop antenna is a primary antenna used in this application. The coupling principle and its application can be applied to other antenna types to improve the power, miniaturize the module size and reduce the power consumption. Accordingly, the present invention is intended to embrace all such alterations, modifications and variations that fall within the spirit and scope of the appended claims.

**Claims**

1. An antenna system for a vehicle comprising:

   a housing defining an interior space having a center;
   a component for at least one of transmitting and receiving signals indicative of a vehicle condition;
   a loop antenna provided in the interior space and electrically connected to the component; and
   a parasitic element for increasing a signal strength of the antenna system, the parasitic element extending from a first end to a second end spaced from the first end by a gap.

2. The antenna system of any preceding claim, wherein the parasitic element is larger than the loop antenna.

3. The antenna system of any preceding claim, wherein the parasitic element is positioned in the interior space.

4. The antenna system of any preceding claim, wherein the parasitic element is secured to the housing exterior.

5. The antenna system of any preceding claim, wherein the parasitic element is embedded within at least one wall of the housing.

6. The antenna system of any preceding claim, wherein the parasitic element is a rectangular ring.

7. The antenna system of any preceding claim, wherein the gap is about 1mm to about 4mm.

8. The antenna system of any preceding claim, wherein the parasitic element further includes at least one secondary gap along its length.

9. The antenna system of any preceding claim, wherein the parasitic element is formed from a metal rod.

10. The antenna system of any preceding claim, wherein the parasitic element is printed on the housing.

11. The antenna system of any preceding claim, wherein the parasitic element has a rectangular cross-section.

12. The antenna system of any preceding claim further including a capacitor positioned in the gap to directly connect the first and second ends together.

13. The antenna system of any preceding claim, wherein the component is a transmitter.

14. The antenna system of any preceding claim, wherein the component is a receiver.

15. The antenna system of any preceding claim, wherein the housing is part of a key FOB.

16. The antenna system of any preceding claim, wherein the housing is part of a tire pressure monitor.

17. The antenna system of any preceding claim, wherein the housing includes a plurality of walls, the parasitic element extending along multiple housing walls.

FIG. 1

FIG. 2

FIG. 3

FIG. 4

FIG. 5

FIG. 6

FIG. 7

FIG. 8

FIG. 9

FIG. 10

EP 3 330 108 A1

FIG. 11

FIG. 12

EP 3 330 108 A1

Europäisches
Patentamt

European
Patent Office

Office européen
des brevets

# EUROPEAN SEARCH REPORT

Application Number

EP 17 20 4078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 02/071536 A1 (MOTOROLA INC [US])<br>12 September 2002 (2002-09-12)<br>* figures 1-8 *<br>* page 8, line 1 - line 12 *<br>* page 12, line 15 - page 13, line 14 *<br>* page 14, line 31 - page 15, line 10 * | 1-6,8,<br>10,13,14<br>15,16 | INV.<br>B60C23/04<br>B60R25/24<br>H01Q1/22<br>H01Q1/32<br>H01Q7/00 |
| X | WO 2008/059312 A1 (NOKIA CORP [FI]; WANG HANYANG [GB]; ZHENG MING [GB])<br>22 May 2008 (2008-05-22)<br>* figures 1-3 *<br>* page 5, line 28 - page 6, line 21 * | 1,2,6,<br>13,14 | |
| X | GB 2 431 053 A (MATSUSHITA ELECTRIC IND CO LTD [JP]) 11 April 2007 (2007-04-11)<br>* figures 2, 4, 5, 10, 14, 15 *<br>* paragraph [0011] *<br>* paragraph [0049] *<br>* paragraph [0053] *<br>* paragraph [0067] - paragraph [0068] * | 1,3,6,9,<br>11,13,14 | |
| X | US 2014/085161 A1 (ZHU JIANG [US] ET AL)<br>27 March 2014 (2014-03-27)<br>* figures 1, 5-7, 11, 13 *<br>* paragraph [0022] - paragraph [0023] *<br>* paragraph [0028] *<br>* paragraph [0034] - paragraph [0035] *<br>* paragraph [0063] *<br>* paragraph [0077] *<br>* paragraph [0081] *<br>* paragraph [0086] * | 1,2,6,7,<br>11-14,17 | TECHNICAL FIELDS SEARCHED (IPC)<br>B60C<br>B60R<br>H01Q |
| Y | US 2010/305779 A1 (HASSAN HASIB [US] ET AL) 2 December 2010 (2010-12-02)<br>* figures 1-3 *<br>* paragraph [0006] - paragraph [0007] *<br>* paragraph [0014] * | 15,16 | |

The present search report has been drawn up for all claims

| Place of search | Date of completion of the search | Examiner |
|---|---|---|
| The Hague | 23 March 2018 | Topak, Eray |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 20 4078

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2018

| Patent document cited in search report | | Publication date | Patent family member(s) | | Publication date |
|---|---|---|---|---|---|
| WO 02071536 | A1 | 12-09-2002 | CN | 1457530 A | 19-11-2003 |
| | | | KR | 20030007569 A | 23-01-2003 |
| | | | WO | 02071536 A1 | 12-09-2002 |
| WO 2008059312 | A1 | 22-05-2008 | CN | 101536250 A | 16-09-2009 |
| | | | EP | 2092602 A1 | 26-08-2009 |
| | | | US | 2010079349 A1 | 01-04-2010 |
| | | | WO | 2008059312 A1 | 22-05-2008 |
| GB 2431053 | A | 11-04-2007 | GB | 2431053 A | 11-04-2007 |
| | | | US | 2007139285 A1 | 21-06-2007 |
| | | | WO | 2006033408 A1 | 30-03-2006 |
| US 2014085161 | A1 | 27-03-2014 | NONE | | |
| US 2010305779 | A1 | 02-12-2010 | NONE | | |

EPO FORM P0459

For more details about this annex : see Official Journal of the European Patent Office, No. 12/82